# EUROPEAN PATENT SPECIFICATION

(11) **EP 1 883 295 B1**
(45) Date of publication and mention of the grant of the patent: **29.02.2012**
(21) Application number: 06741328.6
(22) Date of filing: 26.05.2006
(51) Int. Cl.: A01K 59/04

(54) **Integral honey centrifuge from frames, combs and opercula, and process for honey extraction**
Integral-Honigzentrifuge für Rahmen, Waben und Opercula, sowie Honigextraktionsverfahren
Centrifugeuse à miel integrée dans des cadres, des rayons et des opercules et procédé d'extraction de miel

(30) Priority: 27.05.2005 BR PI0503542
(43) Date of publication of application: 06.02.2008
(73) Proprietor: Vilani Oliveira, José Jr., 22250-060 Rio de Janeiro (BR)
(72) Inventor: Vilani Oliveira, José Jr., 22250-060 Rio de Janeiro (BR)
(74) Representative: Johansson, Lars E.
(86) International application number: PCT/BR2006/000101
(87) International publication number: WO 2006/125289

(56) References cited:
- DE-C- 370 411
- DE-C- 814 965
- DE-C- 900 395
- FR-A- 798 368
- FR-A- 1 296 658
- FR-A- 2 583 953
- FR-A1- 2 583 953
- US-A- 1 657 717

## Description

The present patent of invention has as objective a rotary equipment to extract honey from combs, opercula, frames, and similar to be used in apiaries, honey warehouses, and similar, with the objective to extract the honey while keeping the same original honey characteristics and composition find in hive combs and frames, and a process to extract honey using this equipment.

It is already known and largely utilized the honey centrifuges or extractors comprised by a rotary center, a rotor, in vertical or horizontal position, composed by a principal or fixation axis, passing by the shield or body, where is provided the twist to generate the rotary movement, fixed to a basket, support or cage, where the frames containing the honey combs are placed. The frames or combs can be, related to the axis, radial or facially disposed. The body or shield involving this rotor normally has a cylinder shape, and it is static. When the rotor is operating, the frames, honeycombs and opercula rotate together, making the honey to be expelled from the combs with velocity, via centrifuge force. The honey is launched against the static wall of the body or shield, suffering a shock once the velocity goes to zero in a little space of time. The honey is pulverized in several small drops due to the impact. These kinds of centrifuges or extractors and the present state of the art were object of the requested invention Honey Extractor in Multiple Layers, BR0102325, The Improved Equipment to Extract Through Centrifugation of Bee Honey Contained in Combs Built in Frames Spaced Among Themselves With Metal Clamps, BR9302727, and Honey Extraction Centrifuge, MU7301030. All the requests above mentioned having the same functioning principle, the internal rotating rotor, composed by a central axis fixing the cages, basket or support, and the centrifuge body or shield wall, static, as described in FR 1,296,658. It is known from FR 2,583,953 and DE 370,411 to provide shield or a cage that is non-fixed, but that design is very complex, e.g. needing a certain outer fixed housing, which also makes it bulky and relatively expensive.

Despite the large utilization of this kind of extractor, some drawbacks can be attributed to them, as for example, the honey alteration promoted by the shock that provokes honey aeration, increasing exchange surface with atmospheric air, due to the formation of several small drops of honey, causing volatile enzyme liberation, foam and micro-foam production, oxidation, humidity increase of till 1.5 percent once the honey is hygroscopic, what means more than 8% of increase over the limit established by the inspection agency, and consequently, the fermentation speedy and flavor alteration. All these drawbacks make that some honey be rejected by the inspection agency, having its price depreciated by the buyers as being a product of inferior quality.

Take into account these problems and with the purpose of their overcome, it was searched and developed a new honey centrifuge or extractor of honey frames, combs, opercula, and similar, objective of the present invention, which has a fundamental difference and consists in composing or linking the basket or support or cage to the principal or fixation axis, and finally, to the body or shield, making a single set, mono block, that rotates. The principal axis can be disposed in the vertical as well as in the horizontal, the start up can be manual or motorized, the frames or combs can be disposed, in relation to the center, in radial or facial positioning, and closed with a cover.

In the upper part or upper end of the centrifuge body or shield where the honey frames or combs are placed through must have a bar, brim or internal edge conveniently calculated and higher than the body or shield to avoid the honey, which is in the internal wall during operation, overflow and spill out from the equipment. This bar, brim or internal edge must be part of the body or shield to avoid contamination and facilitates the equipment cleanness.

The integral honey centrifuge or extractor way of construction solves the drawbacks pointed in its totality. The humidity increasing, foam and micro-foam production, volatile enzyme liberation, oxidation, and fermentation due to the extraction process and shock are reduced to zero. Once the equipment be functioning, the honey leaving the alveoluses, honeycombs, opercula, or similar, it drains the body or shield wall, which is also rotating, at the same velocity of frames, combs, opercula, or similar and it will be contained on the wall until the movement cease. The relative velocity between the wall, body or shield and the honey frames, combs, opercula, and similar is zero. When the centrifuge rotor stops rotating, the effect on the honey frames or combs and on the honey on the wall or shield caused by the centrifuge force ceases. The honey drains to the inferior part where is located a collector with a drain or exit for the honey. During the whole extraction or centrifugation process the honey is extracted without suffering shocks or impacts, once there is not abrupt deceleration, does not suffer neither aeration nor pulverization, keeping its total integrity, without any alteration in the flavor and preserving it for much more time, prolonging the beginning of fermentation, maintaining relative humidity and original volatile enzymes.

On the other hand the new constructive aspect makes the manufacturing and mounting simpler e economic, and mainly makes the cleanness and hygiene of the equipment simpler and easy once diminishes the amount of pieces in the interior of the equipment body or shield, and enter in contact with the product or may come to enter in contact. The bearings can be fixed on the external part of the set, getting rid of the need of having an axis passing through the internal part of the body or shield. In the manufacture of a bore in the body or shield to pass the axis, it would be necessary also seals and orings for sealing purposes, which could cause honey contamination or make difficult the hygiene and asepsis. This new constructive aspect also eliminates clamps, fixers, spacers, separators, and similar to fix or separate the honey frames once the frames stay sustained or fixed on the support correctly calculated and dimensioned in order the frames stay on the support by the way of their own weight, when the equipment is stopped, or by the way of the centrifuge force, when the equipment is moving, without dropping or falling down.

The appended drawings show the integral honey centrifuge or extractor disposition, objective of the present invention, which:

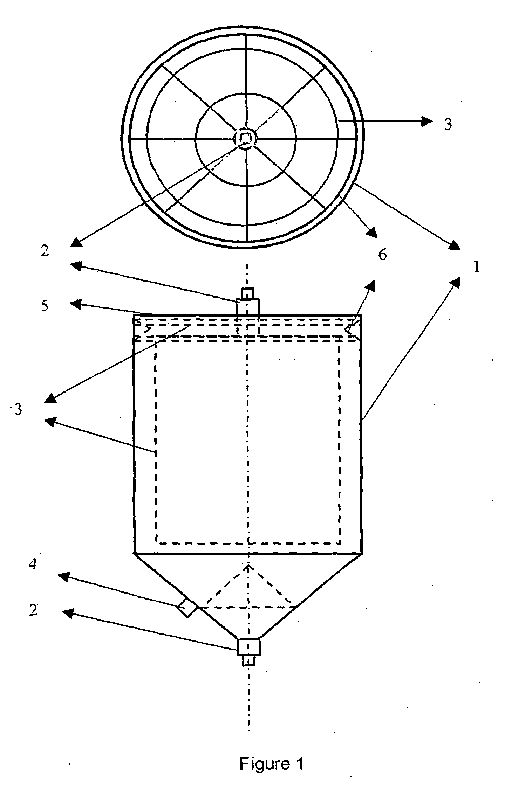

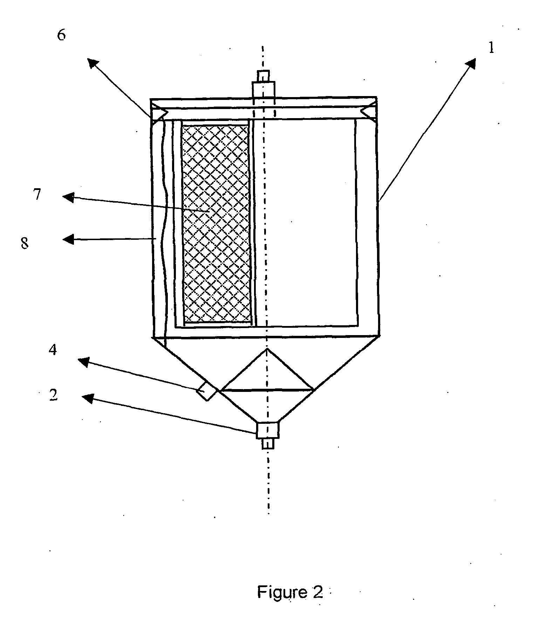

Figure 1 shows the equipment mounted with superior and frontal views and Figure 2 shows it in a cut view during functioning.

In conformity with what is illustrated in the Figures above related, the honey centrifuge or extractor, object of the present invention, consists of a body or shield (1), with bearings to fix the set (2) the structure, basket, cage or support to the honey frames or combs (3), honey exit (4), cover (5), and the internal bar, brim or edge (6).

The frames with honeycombs not operculated (7) are placed on the support (3), disposed in a radial or facial way, the centrifuge is put to work by manual or motorized action, and after a period of functioning, the centrifuge is stopped in order to have the honey extracted (8) from the frames (7), and which are on the internal wall of the body, and was under action of the centrifuge force, drains by the way of gravity force and it is collected in the honey exit (4).

The internal bar, brim, or edge (6) avoids the honey (8), which is on the wall or shield (1) due to the action of centrifuge force during operation, to spill.

Logically, the honey extractor or centrifuge can be obtained in several sizes, capacities, and ways to be put in action to attend the user's needs of this kind of equipment.

## Claims

1. Integral honey centrifuge for frames, combs and opercula, comprising a centrifuge body (1) with bearings (2) to fix said body (1), a basket or a cage or a support (3) for the frames (7) with honeycombs, an exit (4) for the honey and a cover (5), making a single set, mono block (1, 2, 3, 4, 5), which rotates, wherein in the upper part or end of the centrifuge body (1) within which are placed the honey frames (7), an internal bar, a brim, or an edge (6).

2. Integral honey centrifuge and for frames, cambs and opercula according to claim 1, **characterized by** the fact that all parts comprised in said single set are arranged to rotate at the same velocity.

3. Integral honey centrifuge for frames, combs and opercula according to claim 2, **characterized by** the fact that said bearings are fixed on an external part of said body (1).

4. Integral honey centrifuge for frames, combs and opercula according to claim 3, **characterized by** the fact that said frames (7) are arranged on the support (3) and fixed to said support (3) by force of gravity or centrifugal force.

5. Process for honey extraction, using the centrifuge in accordance with claim 1, **characterized by** the fact that the frames (7) with the honeycombs are placed on the basket, cage or support (3), disposed in a radial or facial way, the centrifuge is started up by manual or motorized action, the honey leaves the honeycomb by the centrifugal force, reaching without impact the centrifuge body(1) that is rotating at the same speed of the honeycomb(7), and after a period of function the centrifuge is stopped in order to have the honey extracted from the frames (7), and which is on the internal wall of the centrifuge body (1), which was under action of the centrifuge force, drained by the action of the gravity force and is collected in the honey exit (4).

6. Process for honey extraction in accordance with claim 5, **characterized by** the fact that the bearings are being fixed on an external part of the set and that at least one honey frame (7) being arranged in the support (3) and being fixed to the support (3) by force of gravity or centrifugal force.

## Patentansprüche

1. Integrierte Honigzentrifuge für Rahmen, Waben und Opercula, umfassend ein Zentrifugengehäuse (1) mit Lagern (2), um das Gehäuse (1) zu befestigen, einen Korb oder Käfig oder einen Träger (3) für die Rahmen (7) mit Honigwaben, einen Austritt (4) für den Honig und eine Abdeckung (5), die einen einzelnen Satz eines Monoblocks (1, 2, 3, 4, 5) darstellen, der rotiert, wobei in dem oberen Teil oder Ende des Zentrifugengehäuses (1), in dem die Honigrahmen (7) angeordnet sind, sich ein innerer Stab, ein Rand oder eine Kante (6) befindet.

2. Integrierte Honigzentrifuge für Rahmen, Waben und Opercula gemäß Anspruch 1, **gekennzeichnet durch** die Tatsache, dass alle Teile, die der einzelne Satz umfasst, eingerichtet sind, mit der gleichen Geschwindigkeit zu rotieren.

3. Integrierte Honigzentrifuge für Rahmen, Waben und Opercula gemäß Anspruch 2, **gekennzeichnet durch** die Tatsache, dass die Lager auf einem äußeren Teil des Gehäuses (1) befestigt sind.

4. Integrierte Honigzentrifuge für Rahmen, Waben und Opercula gemäß Anspruch 3, **gekennzeichnet durch** die Tatsache, dass die Rahmen (7) auf dem Träger (3) angeordnet sind und **durch** Gravitationskraft oder Zentrifugalkraft an dem Träger (3) befestigt sind.

5. Verfahren zum Honigschleudern, unter Verwendung der Zentrifuge gemäß Anspruch 1, **dadurch gekennzeichnet, dass** die Rahmen (7) mit den Honigwaben auf dem Korb, Käfig oder Träger (3) in radialer oder frontaler Weise angeordnet platziert werden, die Zentrifuge durch manuelle oder motorisierte Betätigung gestartet wird, der Honig die Honigwabe durch die Zentrifugalkraft verlässt und ohne Aufschlag das Zentrifugengehäuse (1) erreicht, das sich mit der gleichen Geschwindigkeit wie die Honigwabe (7) dreht, und nach einer Funktionsdauer die Zentrifuge gestoppt wird, um den Honig von den Rahmen (7) zu schleudern, der sich auf der Innenwand des Zentrifugengehäuses (1) befindet, und der der Wirkung der Zentrifugalkraft ausgesetzt war, durch die Wirkung der Gravitationskraft abfließt und in dem Honig-Autritt (4) gesammelt wird.

6. Verfahren zum Honigschleudern gemäß Anspruch 5, **gekennzeichnet durch** die Tatsache, dass die Lager auf einem äußeren Teil des Satzes befestigt sind, und dass mindestens ein Honigrahmen (7) in dem Träger (3) angeordnet wird und **durch** Gravitationskraft oder Zentrifugalkraft an dem Träger (3) befestigt ist.

## Revendications

1. Centrifugeuse à miel intégrée pour des cadres, des rayons et des opercules, comprenant un corps de centrifugeuse (1) avec des paliers (2) pour fixer ledit corps (1), un panier ou une cage ou un support (3) pour les cadres (7) avec des nids d'abeilles, une sortie (4) pour le miel et un couvercle (5), constituant un ensemble unique monobloc (1, 2, 3, 4, 5), qui tourne, où il existe dans la partie ou l'extrémité supérieure du corps de centrifugeuse (1) à l'intérieur duquel sont placés les cadres à miel (7), une barre interne, un bord, ou une bordure (6).

2. Centrifugeuse à miel intégrée pour des cadres, des rayons et des opercules selon la revendication 1, **caractérisée par le fait que** toutes les parties comprises dans ledit ensemble unique sont agencées pour tourner à la même vitesse.

3. Centrifugeuse à miel intégrée pour des cadres, des rayons et des opercules selon la revendication 2, **caractérisée par le fait que** lesdits paliers sont fixés sur une partie externe dudit corps (1).

4. Centrifugeuse à miel intégrée pour des cadres, des rayons et des opercules selon la revendication 3, **caractérisée par le fait que** lesdits cadres (7) sont agencés sur le support (3) et fixés audit support (3) par une force de gravité ou une force centrifuge.

5. Procédé d'extraction de miel, utilisant la centrifugeuse selon la revendication 1, **caractérisé par le fait que** les cadres (7) avec les nid-d'abeilles sont placés sur le panier, la cage ou le support (3), disposés d'une manière radiale ou faciale, la centrifugeuse étant démarrée par une action manuelle ou motorisée, le miel quittant les nid-d'abeilles par l'action de la force centrifuge, en atteignant sans impact le corps de centrifugeuse (1) qui tourne à la même vitesse que les nid-d'abeilles (7), et après une période de fonctionnement la centrifugeuse est arrêtée afin d'extraire le miel des cadres (7), et qui se trouve sur la paroi interne du corps de centrifugeuse (1), qui était sous l'action de la force centrifuge, est drainé par l'action de la force de gravité et est recueilli dans la sortie à miel (4).

6. Procédé d'extraction de miel selon la revendication 5, **caractérisé par le fait que** les paliers sont fixés sur une partie externe de l'ensemble et qu'au moins un cadre à miel (7) est agencé dans le support (3) et est fixé au support (3) par une force de gravité ou une force centrifuge.
